# EUROPEAN PATENT SPECIFICATION

(11) **EP 3 154 378 B1**
(45) Date of publication and mention of the grant of the patent: **08.07.2020**
(21) Application number: 15723751.2
(22) Date of filing: 18.05.2015
(51) Int. Cl.: A23L 33/20, A23L 2/60, A23L 27/30

(54) **IMPROVED SWEETENER**
VERBESSERTER SÜSSSTOFF
ÉDULCORANT AMÉLIORÉ

(30) Priority: 20.05.2014 US 201462000773 P; 18.07.2014 GB 201412840
(43) Date of publication of application: 19.04.2017
(73) Proprietor: Tate & Lyle Ingredients Americas LLC, Hoffmann Estates, IL 60192 (US); Tate & Lyle Technology Limited, London WC2B 6AT (GB)
(72) Inventor: WOODYER, Ryan D., Hoffman Estates, Illinois 60192 (US); BRIDGES, John R., Hoffman Estates, Illinois 60192 (US); COHEN, Jason C., Hoffman Estates, Illinois 60192 (US); FLETCHER, Joshua Nehemiah, Hoffman Estates, Illinois 60192 (US); ZHOU, Yuqing, Hoffman Estates, Illinois 60192 (US)
(74) Representative: Nieuwenhuys, William Francis
(86) International application number: PCT/GB2015/051453
(87) International publication number: WO 2015/177522

(56) References cited:
- EP-A1- 2 156 751
- EP-A2- 2 756 764
- WO-A1-2014/152791
- WO-A1-2014/186084
- WO-A1-2015/061028
- WO-A1-2015/075473
- US-A1- 2009 304 891
- US-A1- 2012 076 908
- Foodnavigator.Com: "Rare sugar may replace sucrose for bakery and beyond", , 9 June 2008 (2008-06-09), XP055184284, Retrieved from the Internet: URL:http://www.foodnavigator.com/Science/R are-sugar-may-replace-sucrose-for-bakery-a nd-beyond [retrieved on 2015-04-20]
- Hisaka Oshima +ῃ ET AL: "Psicose Contents in Various Food Products and its Origin", , 24 April 2006 (2006-04-24), XP055167568, Retrieved from the Internet: URL:http://www.panelamonitor.org/media/doc repo/document/files/psicose-contents-in-va rious-food-products-and-its-origin.pdf [retrieved on 2015-02-05]
- P.A. Wolf ET AL: "Application of Agonist-Receptor Modeling to the Sweetness Synergy between High Fructose Corn Syrup and Sucralose, and between High-Potency Sweeteners", Journal of Food Science, vol. 75, no. 2, 1 March 2010 (2010-03-01), pages S95-S102, XP055411167, US ISSN: 0022-1147, DOI: 10.1111/j.1750-3841.2009.01463.x

## Description

### Field of the Invention

The present invention relates generally to a low or "zero"-calorie synergistic sweetener composition. In particular, the present invention relates to a sweetener composition with sweetness synergy and improved taste. The present invention also relates to food or beverage products comprising said sweetener composition.

### Background of the Invention

Many food and beverage products contain nutritive sweeteners such as sucrose (generally referred to as 'sugar' or 'table sugar'), glucose, fructose, corn syrup, high fructose corn syrup and the like. Such sweeteners supply not only sweetness to the food and beverage products, but also bulk, texture and desirable functional properties such as browning, humectancy, freezing point depression and the like. They also produce a favorable sensory response, for example in terms of quality of sweetness, lack of bitterness and off taste, desirable temporal profile and desirable mouthfeel.

Although desirable in terms of taste and functional properties, excess intake of nutritive sweeteners, such as sucrose, has long been associated with an increase in diet-related health issues, such as obesity, heart disease, metabolic disorders and dental problems. This worrying trend has caused consumers to become increasingly aware of the importance of adopting a healthier lifestyle and reducing the level of nutritive sweeteners in their diet.

In recent years, there has been a movement towards the development of replacements for nutritive sweeteners, with a particular focus on the development of low or zero-calorie sweeteners. An ideal replacement for a nutritive sweetener is a sweetener that has the same desirable taste characteristics and functional properties as the nutritive sweetener, but which also has fewer or substantially no calories. Aiming to meet this growing need, the market has been flooded with possible candidates to replace conventional nutritive sweeteners. Unfortunately, however, many of the low or zero calorie replacements offered on the market lack one or all of the necessary characteristics, and often exhibit bitterness or off-taste. Therefore, many of the proposed sweeteners are not an ideal replacement for nutritive sweeteners.

One proposed alternative to nutritive sweeteners is allulose (also known as D-psicose). Allulose is known as a "rare sugar", since it occurs in nature in only very small amounts. It provides around 70% of the sweetness of sucrose, but only around 5% of the calories (approximately 0.2 kcal/g). It may therefore essentially be considered to be a 'zero calorie' sweetener.

In view of its scarcity in nature, production of allulose relies on the epimerization of readily available fructose. Ketose-3-epimerases can interconvert fructose and allulose, and various ketose-3-epimerases are known for carrying out this conversion.

US patent no. 8,030,035 and PCT publication no. WO2011/040708 disclose that D-psicose can be produced by reacting D-fructose with a protein derived from *Agrobacterium tumefaciens*, and having psicose 3-epimerase activity.

US patent publication no. 2011/0275138 discloses a ketose 3-epimerase derived from a microorganism of the *Rhizobium* genus. This protein shows a high specificity to D- or L-ketopentose and D- or L-ketohexose, and especially to D-fructose and D-psicose. This document also discloses a process for producing ketoses by using the protein.

Korean patent no. 100832339 discloses a Sinorhizobium YB-58 strain which is capable of converting fructose into psicose (i.e. allulose), and a method of producing psicose using a fungus body of the Sinorhizobium YB-58 strain.

Korean patent application no. 1020090098938 discloses a method of producing psicose using *E. coli* wherein the *E. coli* expresses a polynucleotide encoding a psicose 3-epimerase.

US patent publication no. 2009/304891 discloses a D-psicose containing sweetener comprising D-psicose, a sugar alcohol and/or a high intensity sweetener.

US patent publication no. 2012/076908 discloses a composition for improving a taste of a high-intensity sweetener containing an isomerized sugar and a rare sugar such that the rare sugar is contained in amount of from 1 to 150 parts by mass based on 100 parts by mass of the isomerized sugar.

Allulose is present in processed cane and beet molasses, steam treated coffee, wheat plant products and high fructose corn syrup. D-allulose is the C-3 epimer of D-fructose and the structural differences between allulose and fructose result in allulose not being metabolized by the human body to any significant extent, and thus having "zero" calories. Thus, allulose is thought to be a promising candidate as a replacement for nutritive sweeteners and as a sweet bulking agent, as it has no calories and is reported to be sweet while maintaining similar properties to sucrose.

Another proposed alternative to nutritive sweeteners is stevia extract. The species *stevia rebaudiana* (or Stevia) contains sweet compounds in its leaves. These compounds may be extracted to provide stevia extracts. The sweet taste of stevia extracts is mainly attributed to a family of compounds known as 'steviol glycosides', examples of which include Rebaudiosides (e.g., Rebaudiosides A to F, M and X), Rubusoside, Stevioside and Dulcosides.

Low or non-caloric sweeteners based on Rebaudioside A and other steviol glycosides can have a bitter or licorice aftertaste, especially at concentrations above 300 ppm. In food applications, preferred use levels (8%-10% sugar equivalence values) are typically 500 ppm to 1000 ppm, which is above the range at which off-tastes are first noticed. Furthermore, allulose may have limitations in use due to cost and digestive tolerance in some applications. Therefore, there is a need to provide an improved replacement for sucrose and other nutritive sweeteners that has low or zero-calories and is without limitations in use, but which also has taste characteristics similar to those of sucrose.

The present invention seeks to provide a solution to the above mentioned problem by providing a sweetener composition having taste characteristics comparable to sucrose but having low or no calories. Advantageously, the present invention also seeks to provide a sweetener composition which has improved taste compared with known sweeteners.

### Summary of the Invention

According to a first aspect of the present invention, there is provided a sweetener composition comprising allulose and a stevia extract, the sweetener composition comprising allulose in an amount of at least 85% by weight and stevia extract in an amount of at least 0.07% by weight relative to the total weight of allulose and stevia extract in the composition on a dry solids basis, wherein the stevia extract comprises Rebaudioside A in an amount of from 60 weight % to 85 weight % relative to the combined total weight of steviol glycosides in the stevia extract on a dry solids basis.

According to an embodiment, the stevia extract additionally comprises at least one steviol glycoside selected from the group consisting of Rebaudioside B, Rebaudioside C, Rebaudioside D, Rebaudioside E, Rebaudioside F, Rebaudioside M, Rebaudioside X, Rubusoside, Stevioside and Dulcosides, and mixtures thereof.

In another embodiment, the at least one steviol glycoside comprises Rebaudioside B. In an embodiment, the stevia extract comprises steviol glycosides in a total amount of at least 90 weight %, preferably in a total amount of 95 weight % or more, relative to the total weight of the stevia extract on a dry solids basis.

In an embodiment, the stevia extract comprises Rebaudioside A and Stevioside in a combined total amount of at least 70 weight %, preferably in a combined total amount of 75 weight % or more, relative to the total weight of the stevia extract on a dry solids basis.

In an embodiment, the stevia extract comprises Rebaudioside A in an amount of from 75 weight % to 80 weight %, relative to the combined total weight of steviol glycosides in the stevia extract on a dry solids basis.

In an embodiment, the stevia extract comprises Rebaudioside B in an amount of from 15 weight % to 30 weight %, preferably from 19 weight % to 23 weight %, relative to the combined total weight of steviol glycosides in the stevia extract on a dry solids basis.

In an embodiment, the sweetener composition comprises allulose in an amount of from 97.5% to 99.9% by weight and stevia extract in an amount of 0.1% to 2.5% by weight relative to the total weight of allulose and stevia extract in the composition on a dry solids basis. In another embodiment, the sweetener composition comprises allulose in an amount of from 98% to 99.9% by weight and stevia extract in an amount of 0.1 % to 2% by weight relative to the total weight of allulose and stevia extract in the composition on a dry solids basis. In another embodiment, the sweetener composition comprises allulose in an amount of from 98.9% to 99.9% by weight and stevia extract in an amount of 0.1 % to 1.1% by weight relative to the total weight of allulose and stevia extract in the composition on a dry solids basis. In another embodiment, the sweetener composition comprises allulose in an amount of from 98.9% to 99.8% by weight and stevia extract in an amount of 0.2% to 1.1% by weight relative to the total weight of allulose and stevia extract in the composition on a dry solids basis. In another embodiment, the sweetener composition comprises allulose in an amount of from 99.5% to 99.8% by weight and stevia extract in an amount of 0.2% to 0.5% by weight relative to the total weight of allulose and stevia extract in the composition on a dry solids basis. In another embodiment, the sweetener composition comprises allulose in an amount of from 98.9% to 99.4% by weight and stevia extract in an amount of 0.6% to 1.1% by weight relative to the total weight of allulose and stevia extract in the composition on a dry solids basis. In another embodiment, the sweetener composition comprises allulose in an amount of from 99.0% to 99.3% by weight and stevia extract in an amount of 0.7% to 1.0% by weight relative to the total weight of allulose and stevia extract in the composition on a dry solids basis. In another embodiment, the sweetener composition comprises allulose in an amount of 99.03% by weight and stevia extract in an amount of 0.97% by weight relative to the total weight of allulose and stevia extract in the composition on a dry solids basis. In another embodiment, the sweetener composition comprises allulose in an amount of from 99.4% to 99.9% by weight and stevia extract in an amount of 0.1% to 0.6% by weight relative to the total weight of allulose and stevia extract in the composition on a dry solids basis. In another embodiment, the sweetener composition comprises allulose in an amount of from 97.5% to 99.0% by weight and stevia extract in an amount of 1.0% to 2.5% by weight relative to the total weight of allulose and stevia extract in the composition on a dry solids basis. In another embodiment, the sweetener composition comprises allulose in an amount of from 98.0% to 98.9% by weight and stevia extract in an amount of 1.1% to 2.0% by
weight relative to the total weight of allulose and stevia extract in the composition on a dry solids basis.

According to an embodiment, the sweetener composition further comprises a sweet taste improving additive, a bulking agent, a flavoring agent, or a stabilizer.

A second aspect of the present invention provides a food or beverage product comprising the sweetener composition of the invention.

According to an embodiment, the food or beverage product is a food product and the sweetener composition is provided as a coating or frosting on the surface of the food product.

According to an embodiment, the food or beverage product is a carbonated or non-carbonated beverage.

A further aspect of the present invention provides a table-top sweetener comprising the sweetener composition of the invention.

According to an embodiment, the table-top sweetener is a dry table-top sweetener. For example, it may be provided as tablets, granules or as a powder.

According to an embodiment, the sweetener composition of the table-top sweetener comprises allulose in an amount of from 98.8% to 99.2% and stevia extract in an amount of from 0.8% to 1.2% by weight relative to the total weight of allulose and stevia extract in the composition on a dry solids basis.

According to an embodiment, the sweetener composition of the table-top sweetener comprises allulose in an amount of from 98.9% to 99.1% and stevia extract in an amount of from 0.9% to 1.1% by weight relative to the total weight of allulose and stevia extract in the composition on a dry solids basis.

According to an embodiment, the sweetener composition of the table-top sweetener comprises allulose in an amount of 99.03% and stevia extract in an amount of 0.07% by weight relative to the total weight of allulose and stevia extract in the composition on a dry solids basis.

In an embodiment, the table-top sweetener further comprises one or more nutritive sweetener.

In an embodiment, the table-top sweetener further comprises one or more co-sweetener selected from the group consisting of high intensity sweeteners and sugar alcohols.

Another aspect of the present invention provides the use of the sweetener composition of the invention in a food product, a beverage product, a pharmaceutical product, a nutritional product, a sports product, or a cosmetic product.

Another aspect of the present invention provides the use of the sweetener composition of the invention as a bulking agent.

Another aspect of the present invention provides the use of the sweetener composition of the invention as a coating agent.

### Brief Description of the Drawings

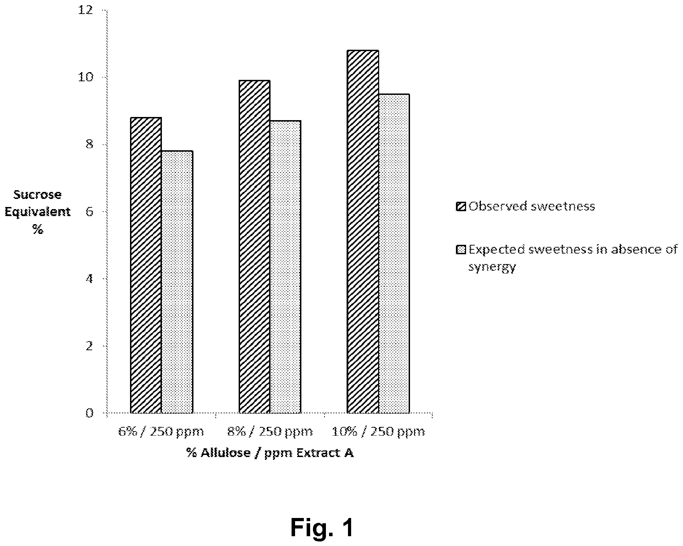

- Figure 1:: The results of paired comparison analysis of a blend of stevia extract and allulose against a stevia extract in neutral pH water.

### Detailed Description

The present invention is based on the finding that allulose and a stevia extract, when present in a sweetener composition, exhibit sweetness synergy whereby the blend is sweeter than the expected sweetness based on the sweetness of its components. Furthermore, it has been found that this blend of allulose and a stevia extract has desirable taste characteristics (for example in terms of reduced off-flavors and off-tastes, and in terms of temporal profile).

Due to the presence of the zero calorie sweeteners, the sweetener composition is low or "zero" calorie. Furthermore, as a consequence of the sweetness synergy exhibited by the composition, the amount of the composition required to provide a given level of sweetness is less than would be expected in the absence of synergy, thereby allowing a further reduction in calories. Thus, the sweetener of the present invention provides enhanced sweetness and desirable taste characteristics, while at the same time allowing a significant reduction in calories compared to a sweet-equivalent amount of a conventional nutritive sweetener.

Using the sweetener composition of the present invention allows delivery of an increased sweetness in food or beverage products when compared to the individual components used separately. This enhanced sweetness means that a smaller amount of sweetener can be used in these products, to provide a temporal and taste profile that closely matches that of sucrose.

In general terms, the present invention relates to a sweetener composition comprising allulose and a stevia extract.

The term "allulose" as used herein refers to a monosaccharide sugar of the structure shown as a Fischer projection in below Formula I. It is also known as "D-psicose":

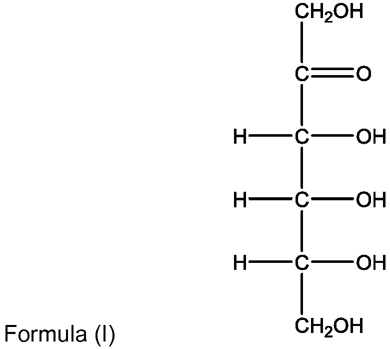

The term "stevia extract" as used herein refers to an extract or sample taken from a Stevia plant, *Stevia rebaudiana.* Such extracts or samples typically comprise at least one steviol glycoside. The term "steviol glycoside" means any of a number of naturally occurring compounds based on the steviol diterpene structure shown in Formula (II):

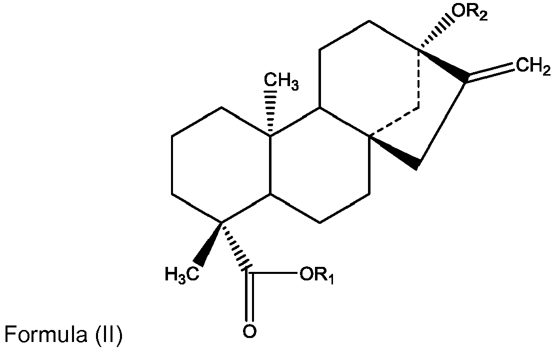

R₁ in above Formula (II) is generally a glucose moiety or hydrogen, while R₂ in above Formula (II) is generally a saccharide moiety including glucose and/or rhamnose moieties.

Examples of steviol glycosides that may be extracted from Stevia include Rebaudioside A, Rebaudioside B, Rebaudioside C, Rebaudioside D, Rebaudioside E, Rebaudioside F, Rebaudioside M, Rebaudioside X, Rubusoside, Stevioside and Dulcosides, and mixtures thereof.

The term "temporal profile" of a composition, sugar or sweetener, as used herein, is a measure of the perceived sweetness intensity of said composition, sugar or sweetener over time. A desirable or advantageous temporal profile is one wherein sweetness is observed quickly and has a short linger similar to that of sucrose.

The term "sucrose equivalent value" or "SEV" as used herein refers to the sweetness equivalent of a sweetener related to the sweetness of sucrose. For example, a sweetener at an SEV value of 5 would have a sweetness similar to a 5% by weight solution of sucrose.

The term "zero calorie" as used herein refers to a sweetener with less than 5 calories per reference amount customarily consumed (RACC) and per labeled serving.

The term "low calorie" as used herein refers to a sweetener having 40 calories or fewer per reference amount customarily consumed (RACC) and per labeled serving.

All amounts given in % by weight are quoted on a dry solids (ds) basis unless specifically stated otherwise. Thus, where components are provided other than in their pure form, the amount added should be adjusted to provide the required amount on a dry solids basis. For example, where allulose is provided as a syrup, the amount of syrup used should be adjusted to supply the required amount of allulose on a dry solids basis.

The present invention provides a sweetener composition comprising allulose and a stevia extract, the sweetener comprising allulose in an amount of at least 85% by weight and stevia extract in an amount of at least 0.07% by weight relative to the total weight of allulose and stevia extract in the composition on a dry solids basis, wherein the stevia extract comprises Rebaudioside A in an amount of from 60 weight % to 85 weight % relative to the combined total weight of steviol glycosides in the stevia extract on a dry solids basis.

According to an embodiment, the stevia extract additionally comprises at least one steviol glycoside selected from the group consisting of Rebaudioside B, Rebaudioside C, Rebaudioside D, Rebaudioside E, Rebaudioside F, Rebaudioside M, Rebaudioside X, Rubusoside, Stevioside and Dulcosides, and mixtures thereof.

According to a preferred embodiment, the at least one steviol glycoside comprises Rebaudioside B. Preferably, the at least one steviol glycoside comprises both Rebaudioside A and Rebaudioside B.

The stevia extract for use in the present invention preferably comprises steviol glycosides in a total amount of at least 90 weight %, preferably in a total amount of 95 weight % or more, relative to the total weight of the stevia extract on a dry solids basis. For example, the stevia extract may comprise steviol glycosides in a total amount of at least 90, 91, 92, 93, 94, 95, 96, 97, 98 or 99 weight %, relative to the total weight of the stevia extract on a dry solids basis.

A preferred stevia extract for use in the present invention comprises Rebaudioside A and Stevioside in a combined total amount of at least 70 weight %, preferably in a combined total amount of 75 weight % or more, relative to the total weight of the stevia extract on a dry solids basis.

Preferably, the stevia extract comprises Rebaudioside A in an amount of from 70 weight % to 85 weight %, and more preferably from 75 weight % to 80 weight %, relative to the combined total weight of steviol glycosides in the stevia extract on a dry solids basis. In some embodiments, the stevia extract comprises Rebaudioside A in an amount of from 60 weight % to 80 weight %, preferably from 67 weight % to 73 weight %, relative to the combined total weight of steviol glycosides in the stevia extract on a dry solids basis. For example, the stevia extract may comprise Rebaudioside A in an amount of 60, 61, 62, 63, 64, 65, 66, 67, 68, 69, 70, 71, 72, 73, 74, 75, 76, 77, 78, 79, 80, 81, 82, 83, 84 or 85 weight %, relative to the combined total weight of steviol glycosides in the stevia extract on a dry solids basis.

According to a preferred embodiment, the stevia extract comprises Rebaudioside B in an amount of from 15 weight % to 30 weight %, preferably from 19 weight % to 23 weight %, relative to the combined total weight of steviol glycosides in the stevia extract on a dry solids basis. For example, the stevia extract may comprise Rebaudioside B in an amount of 15, 16, 17, 18, 19, 20, 21, 22, 23, 24, 25, 26, 27, 28, 29 or 30 weight %, relative to the combined total weight of steviol glycosides in the stevia extract on a dry solids basis.

The stevia extract used in the present invention may be one of the stevia extracts described in WO 2012/102769. A particular stevia extract that may be mentioned in this regard is described in Example 1 of WO 2012/102769, and comprises 21 weight % Rebaudioside B (relative to the combined total weight of steviol glycosides in the stevia extract on a dry solids basis) and a ratio of Rebaudioside A to Rebaudioside B of 3:1.

An example stevia extract that is disclosed in Example 1 of WO 2012/102769 and which may be used in the present invention contains 70.56 weight % of Rebaudioside A, 6.45 weight % of Stevioside, 20.97 weight % of Rebaudioside B and 2.02 weight % of Rebaudioside C, based on the total weight of steviol glycosides contained in the stevia extract on a dry solids basis.

In another embodiment, the sweetener composition comprises allulose in an amount of from 97.5% to 99.9% by weight and stevia extract in an amount of 0.1% to 2.5% by weight relative to the total weight of allulose and stevia extract in the composition on a dry solids basis. In another embodiment, the sweetener composition comprises allulose in an amount of from 98% to 99.9% by weight and stevia extract in an amount of 0.1% to 2% by weight relative to the total weight of allulose and stevia extract in the composition on a dry solids basis. In another embodiment, the sweetener composition comprises allulose in an amount of from 98.9% to 99.9% by weight and stevia extract in an amount of 0.1% to 1.1% by weight relative to the total weight of allulose and stevia extract in the composition on a dry solids basis. In another embodiment, the sweetener composition comprises allulose in an amount of from 98.9% to 99.8% by weight and stevia extract in an amount of 0.2% to 1.1% by weight relative to the total weight of allulose and stevia extract in the composition on a dry solids basis. In another embodiment, the sweetener composition comprises allulose in an amount of from 99.5% to 99.8% by weight and stevia extract in an amount of 0.2% to 0.5% by weight relative to the total weight of allulose and stevia extract in the composition on a dry solids basis. In another embodiment, the sweetener composition comprises allulose in an amount of from 98.9% to 99.4% by weight and stevia extract in an amount of 0.6% to 1.1% by weight relative to the total weight of allulose and stevia extract in the composition on a dry solids basis. In another embodiment, the sweetener composition comprises allulose in an amount of from 99.0% to 99.3% by weight and stevia extract in an amount of 0.7% to 1.0% by weight relative to the total weight of allulose and stevia extract in the composition on a dry solids basis. In another embodiment, the sweetener composition comprises allulose in an amount of 99.03% by weight and stevia extract in an amount of 0.97% by weight relative to the total weight of allulose and stevia extract in the composition on a dry solids basis. In another embodiment, the sweetener composition comprises allulose in an amount of from 99.4% to 99.9% by weight and stevia extract in an amount of 0.1% to 0.6% by weight relative to the total weight of allulose and stevia extract in the composition on a dry solids basis. In another embodiment, the sweetener composition comprises allulose in an amount of from 97.5% to 99.0% by weight and stevia extract in an amount of 1.0% to 2.5% by weight relative to the total weight of allulose and stevia extract in the composition on a dry solids basis. In another embodiment, the sweetener composition comprises allulose in an amount of from 98.0% to 98.9% by weight and stevia extract in an amount of 1.1% to 2.0% by weight relative to the total weight of allulose and stevia extract in the composition on a dry solids basis.

According to an embodiment, the sweetener composition further comprises a sweet taste improving additive, a bulking agent, a flavoring agent, or a stabilizer. Sweet taste improving additives suitable for use in the present invention include one or more selected from the group consisting of anti-foaming agents (also known as anti-foams; examples include polydimethylsiloxane and/or silicon dioxide), cyclodextrins, sweet taste enhancers, bitter maskers and flavor modifiers.

According to an embodiment, the sweetener composition of the present invention does not comprise any mogrosides.

A further aspect of the present invention provides a food product comprising the sweetener composition of the invention. Non-limiting examples of a food product include a confectionary product (including, but not limited to, jelly candies, hard candies and gums), a dessert product such as, yogurt (including, but not limited to, full fat, reduced fat and fat-free dairy yoghurts, as well non-dairy and lactose-free yoghurts and frozen equivalents of all of these), frozen desserts (including, but not limited to, frozen dairy desserts such as ice-cream - including regular ice cream, soft-serve ice cream and all other types of ice cream - and frozen non-dairy desserts such as non-dairy ice cream, sorbet and the like), sweet bakery products (including, but not limited to, biscuits, cakes, rolls, pies, pastries, and cookies), pre-made sweet bakery mixes for preparing sweet bakery products, pie fillings (including, but not limited to, fruit pie fillings and nut pie fillings such as pecan pie filling), a cereal product such as sweetened breakfast cereals (including, but not limited to, extruded (kix type) breakfast cereals, flaked breakfast cereals and puffed breakfast cereals), cereal coating compositions, baked goods including bread products (including, but not limited to, leavened and unleavened breads, yeasted and unyeasted breads such as soda breads, breads comprising any type of wheat flour, breads comprising any type of non-wheat flour (such as potato, rice and rye flours), gluten-free breads), pre-made bread mixes for preparing bread products, frozen dairy products, meats, dairy products, condiments, snack bars (including, but not limited to, cereal, nut, seed and/or fruit bars), soups, dressings, mixes, prepared foods, baby foods, diet preparations, syrups, food coatings, dried fruit, sauces, gravies, spreads (including, but not limited to, jams/jellies, butters and other spreadable preserves, conserves and the like). Other types of food product not mentioned here but which conventionally include one or more nutritive sweetener may also be contemplated in the context of the present invention, especially those which are reduced sugar or low sugar products. The food product may be an animal feed product. The food product of the invention may comprise the sweetener composition as a coating or frosting formed on the surface of the product. This coating improves the flavor of the food product as well as its shelf life.

Another aspect of the invention provides a beverage product comprising the sweetener composition of the present invention. Non-limiting examples of a beverage product include a carbonated beverage (including, but not limited to, soft carbonated beverages), a non-carbonated beverage (including, but not limited to, soft non-carbonated beverages such as flavored waters and sweet tea or coffee based beverages), fruit-flavored beverage, fruit-juice, tea, milk, coffee especially those which are reduced sugar or low sugar products. Frozen beverage products (sometimes known as 'slurpees') are also explicitly contemplated. Other types of beverage product not mentioned here but which conventionally include one or more nutritive sweetener may also be contemplated in the context of the present invention, especially those which are reduced sugar or low sugar products.

A further aspect of the present invention provides a table-top sweetener comprising the sweetener composition of the invention.

The table-top sweeteners of the present invention may optionally include one or more further ingredients selected from the group consisting of bulking agents (such as maltodextrin, polydextrose, gums - such as xanthan gum or guar gum, soluble corn fiber (SCF), starches and polyols), natural and/or artificial flavors, natural and/or artificial colors, fiber, acidulants, vitamins, antioxidants, preservatives, starch hydrolysates and the like.

According to an embodiment, the table-top sweetener is a dry table-top sweetener. For example, it may take the form of tablets, granules or a powder. Liquid table-top sweeteners may also be contemplated, and typically take the form of an aqueous solution of the components.

According to an embodiment, the sweetener composition of the table-top sweetener comprises allulose in an amount of from 98.8% to 99.2% and stevia extract in an amount of from 0.8% to 1.2% by weight relative to the total weight of allulose and stevia extract in the composition on a dry solids basis.

According to an embodiment, the sweetener composition of the table-top sweetener comprises allulose in an amount of from 98.9% to 99.1% and stevia extract in an amount of from 0.9% to 1.1% by weight relative to the total weight of allulose and stevia extract in the composition on a dry solids basis.

According to an embodiment, the sweetener composition of the table-top sweetener comprises allulose in an amount of 99.03% and stevia extract in an amount of 0.07% by weight relative to the total weight of allulose and stevia extract in the composition on a dry solids basis.

According to an embodiment, the table-top sweetener further comprises one or more nutritive sweetener. The nutritive sweetener may be selected from the group consisting of sucrose, glucose, glucose syrup, isoglucose, fructose, glucose-fructose syrup, maltose, lactose, corn syrup, high fructose corn syrup, invert sugar, molasses, honey and agave. The nutritive sweetener is sucrose in one preferred embodiment. Where the table-top product includes a nutritive sweetener, said nutritive sweetener may be present in an amount of up to 30% by weight based on the total weight of the table-top sweetener. For example, the nutritive sweetener may be present in an amount of 26% by weight based on the total weight of the table-top sweetener.

According to an embodiment, the table-top sweetener further comprises one or more co-sweetener selected from the group consisting of high intensity sweeteners and sugar alcohols.

Various synthetic high potency sweeteners may also be used as the one or more co-sweetener of the present invention. Specific examples include sucralose, aspartame and acesulfame potassium (Ace K).

Various sugar alcohols may also be used as the one or more co-sweetener of the present invention. Specific examples include maltitol, xylitol and erythritol.

Table-top sweeteners according to the present invention may typically be used to sweeten beverages, especially hot beverages such as tea and coffee. It has been found that the taste provided by the table-top product is similar to the taste provided by sucrose, and is superior to many known table-top sweeteners.

The present invention provides the use of the sweetener composition of the invention in a food product, a beverage product, a pharmaceutical product, a nutritional product, a sports product, or a cosmetic product, as a bulking agent or as a coating agent.

The sweetener composition may be formulated in any ingestible form, for example, as a syrup, in powder form, tablet form, as granules, in a solution or in any other suitable form including beverages and food products.

As outlined in the below examples, the sweetener composition of the invention exhibits a sucrose equivalent value (SEV) greater than the predicted value based on its individual components. Put another way, for a given SEV, a lower amount of each of the components is required than would be predicted based on their individual SEVs; indeed, it has been shown that the required amount of allulose can be reduced by around 30%, while the required amount of stevia extract can be reduced by over 20%. These results show that the sweetener composition of the present invention displays significant sweetness synergy.

The following examples are exemplary only and are not intended to be limiting in any way.

### Examples

### Example 1: Paired Comparison Study

### Introduction

A paired comparison study was carried out using the methodology described in Wolf, P. A. et a/. (2010), J. Food Science, 75 (2), S95-S102: "Application of Agonist-Receptor Modeling to the Sweetness Synergy between High Fructose Corn Syrup and Sucralose, and between High-Potency Sweeteners".

### Materials

TASTEVA™ (available from Tate & Lyle) was used as a stevia extract in the following examples and is referred to as Extract A.

### Method

Tate & Lyle employees participated in sweetness paired comparisons of Extract A and allulose against Extract A in neutral pH water. Panelists were asked to taste test solutions of Extract A/allulose blends and solutions of known Extract A concentration, and state which was sweeter. A minimum of three paired comparisons were conducted for each of the binary sweetener mixtures in each test session. The paired comparisons were rotated. There was a one minute waiting period between each paired comparison. The solutions were served in 2 ounce (50 mL) soufflé cups coded with 3-digit codes at room temperature. Reverse osmosis water and unsalted crackers were available for the panelists to clear their palates before and during testing.

Figure 1 shows the results of the analysis for three mixtures by way of example. In each case, the expected sweetness (sucrose equivalent) of each mixture in the absence of synergy is plotted next to the observed sweetness of the mixture. In each case, it can be seen that the observed sweetness is significantly greater than the expected sweetness. Thus, significant sweetness synergy has been shown for blends of allulose and stevia extract.

### Example 2: Dry table-top sweeteners:

A dry table-top sweetener was prepared with stevia extract (Extract A) and allulose, and comparative and control compositions were also prepared using Truvia™ and sucrose respectively. The compositions are shown in Table 2:

**Table 2:**

| **Sample** | **Table top composition** | **Total dry weight of each table-top sample in 200mL of coffee** |
|---|---|---|
| 1 | 99.03% Allulose + 0.97% Extract A | 3.53 gram |
| | Truvia™ (comparative) | 3.5 gram |
| | Sucrose (control) | 8.4 gram |

Each combination was dissolved in hot coffee. The total weight of each combination was designed such that the sweetness of each combination in 200ml of coffee is similar to that of 8-10 grams of sucrose in the same amount of coffee. The coffee was made by brewing 91.9 grams of Starbucks™ Blounde Veranda Blend ground coffee with about 1600 mL of water. The calorie content of each combination was targeted to be less than 5 kcal/200mL coffee. Five panelists were asked to compare the sweetness and taste profile of each sample against sucrose control and Truvia™ (a commercially available stevia-based tabletop sweetener based on erythritol and Reb A 97) in hot coffee on a scale of 1 to 5. The results are shown in Table 3:

**Table 3:**

| | **Sample 1** | **Truvia™** |
|---|---|---|
| **Average rating** | 2.4 | 1.2 |

It was unexpectedly found that allulose can make low calorie table-top sweeteners taste more like sugar (sucrose). It was also unexpectedly found that allulose-based low or zero calorie table top sweeteners taste significantly better than an erythritol-based table top product.

### Example 3: Lemonade:

Lemonade samples were prepared using the following sweetener systems:

**Table 4:**

| **Sample** | **Sweetener System (amounts relative to final lemonade)** |
|---|---|
| A (reference) | Sucrose (11 wt%) |
| B (comparative) | Rebaudioside A (2000 ppm) |
| C | Allulose (5 wt%, ds); Rebaudioside A (500 ppm) |

All samples were prepared in 5% lemon solution. The 5% lemon solution was prepared by diluting 5 grams of 100% lemon concentrate with 95 grams of water. An 11% sucrose/lemon solution was also prepared as a reference, by diluting 11 grams of sucrose and 5 grams of 100% lemon concentrate with 84 grams of water. Allulose was provided in the form of an allulose syrup with 95% pure allulose and 78% dry solid (DS).

A total of 200 grams of each sample was prepared in glass bottles and was stirred with a stirrer bar until completely clear. Once the samples were completely dissolved, they were allowed to settle on the bench until the bubbles were gone.

All samples were evaluated by an expert group of tasters. Sample C was found to be less bitter and to have less sweetness linger than Sample B, and to be more similar overall to Sample A.

### Example 4: Lemonade:

Lemonade samples were prepared using the following sweetener systems, each of which were made to be approximately equal sweet before the study:

**Table 5:**

| **Sample** | **Sweetener System (amounts relative to final lemonade)** |
|---|---|
| A (reference) | Sucrose (11 wt%) |
| B (reference) | Extract B (2000 ppm) |
| C | Extract B (80 ppm); Sucrose (5.5 wt%); Allulose (5 wt%) |
| C (comparative) | Extract B (290 ppm); Sucrose (5.5 wt%) |
| D | Extract B (380 ppm); Sucrose (3 wt%); Allulose (5 wt%) |
| D (comparative) | Extract B (720 ppm); Sucrose (3 wt%) |
| E | Rebaudioside A (80 ppm); Sucrose (5.5 wt%); Allulose (5 wt%) |
| E (comparative) | Rebaudioside A (280 ppm); Sucrose (5.5 wt%) |

| | |
|---|---|
| Extract B: An SG95 comprising Rebaudioside A and stevioside (75:25) | |

All samples were prepared in 5% lemon solution. The 5% lemon solution was prepared by diluting 5 grams of 100% lemon concentrate with 95 grams of water. An 11% sucrose/lemon solution was also prepared as a reference, by diluting 11 grams of sucrose and 5 grams of 100% lemon concentrate with 84 grams of water. A 2000 ppm Extract B/lemon solution was prepared as a further reference, by diluting 200 mg of Extract B and 5 grams of 100% lemon concentrate with 94.8 grams of water. Allulose was provided in the form of an allulose syrup with 95% pure allulose and 78% dry solid (DS).

A total of 200 grams of each sample was prepared in glass bottles and was stirred with a stirrer bar until completely clear. Once the samples were completely dissolved, they were allowed to settle on the bench until the bubbles were gone.

All samples were evaluated by an expert group of tasters (9 or 12 tasters *per* test). The following properties were evaluated on scales of 1 to 5: i) Similarity to sucrose (1 = like sucrose; 5 = not at all like sucrose); ii) Sweetness (1 = very low; 5 = very high); iii) Bitterness (1 = not at all bitter; 5 = very high bitterness); iv) Sweetness onset (1 = very slow; 5 = very quick); v) Linger (1 = very little; 5 = very long). The results are shown in Table 6:

**Table 6:**

| **Sample** | **Similarity to sucrose** | **Sweetness** | **Bitterness** | **Sweetness Onset** | **Linger** |
|---|---|---|---|---|---|
| A (reference) | 1 | 4 | 1 | 5 | 1 |
| B (reference) | | | 4 | | |
| C | 2.1 | 3.4 | 1.3 | 4.3 | 1.3 |
| C (comparative) | 2.4 | 3.3 | 1.7 | 4.0 | 2.1 |
| D | 2.9 | 3.1 | 2.4 | 3.9 | 2.0 |
| D (comparative) | 3.5 | 3.0 | 2.9 | 3.4 | 2.4 |
| E | 2.1 | 3.3 | 1.4 | 4.3 | 1.6 |
| E (comparative) | 2.7 | 3.1 | 1.6 | 3.8 | 2.1 |

The results show that the samples including allulose (C, D and E) were more similar to sucrose, less bitter, had quicker sweetness onset and had less linger than the samples without allulose (comparative C, D and E).

## Claims

1. A sweetener composition comprising allulose and a stevia extract, the sweetener composition comprising allulose in an amount of at least 85% by weight and stevia extract in an amount of at least 0.07% by weight relative to the total weight of allulose and stevia extract in the composition on a dry solids basis, wherein the stevia extract comprises Rebaudioside A in an amount of from 60 weight % to 85 weight % relative to the combined total weight of steviol glycosides in the stevia extract on a dry solids basis.

2. The sweetener composition according to claim 1, wherein the stevia extract comprises Rebaudioside A in an amount of from 75 weight % to 80 weight % relative to the combined total weight of steviol glycosides in the stevia extract on a dry solids basis.

3. The sweetener composition according to claim 1 or 2, wherein the stevia extract comprises at least one steviol glycoside selected from the group consisting of Rebaudioside B, Rebaudioside C, Rebaudioside D, Rebaudioside E, Rebaudioside F, Rebaudioside M, Rebaudioside X, Rubusoside, Stevioside and Dulcosides, and mixtures thereof and, wherein the stevia extract preferably comprises Rebaudioside B.

4. The sweetener composition according to any preceding claim, wherein the stevia extract comprises steviol glycosides in a total amount of at least 90 weight %, preferably in a total amount of 95 weight % or more, relative to the total weight of the stevia extract on a dry solids basis.

5. The sweetener composition according to any preceding claim, wherein the stevia extract comprises Rebaudioside A and Stevioside in a combined total amount of at least 70 weight %, preferably in a combined total amount of 75 weight % or more, relative to the total weight of the stevia extract on a dry solids basis.

6. The sweetener composition according to any preceding claim, wherein the stevia extract comprises Rebaudioside B in an amount of from 15 weight % to 30 weight %, preferably from 19 weight % to 23 weight %, relative to the combined total weight of steviol glycosides in the stevia extract on a dry solids basis.

7. The sweetener composition according to any preceding claim, comprising allulose in an amount of from 97.5% to 99.9% by weight and stevia extract in an amount of 0.1% to 2.5% by weight relative to the total weight of allulose and stevia extract in the composition on a dry solids basis;
preferably comprising allulose in an amount of from 98% to 99.9% by weight and stevia extract in an amount of 0.1% to 2% by weight relative to the total weight of allulose and stevia extract in the composition on a dry solids basis;
preferably comprising allulose in an amount of from 98.9% to 99.4% by weight and stevia extract in an amount of 0.6% to 1.1% by weight relative to the total weight of allulose and stevia extract in the composition on a dry solids basis;
preferably comprising allulose in an amount of from 99.0% to 99.3% by weight and stevia extract in an amount of 0.7% to 1.0% by weight relative to the total weight of allulose and stevia extract in the composition on a dry solids basis;
preferably comprising allulose in an amount of about 99.03% by weight and stevia extract in an amount of about 0.97% by weight relative to the total weight of allulose and stevia extract in the composition on a dry solids basis.

8. The sweetener composition according to any preceding claim, further comprising a sweet taste improving additive, a bulking agent, a flavoring agent, or a stabilizer.

9. A food or beverage product comprising the sweetener composition according to any one of the preceding claims.

10. The food or beverage product according to claim 9, wherein the product is a food product and the sweetener composition is provided as a coating or frosting on the surface of the food product.

11. The food or beverage product according to claim 9, wherein the product is a carbonated or non-carbonated beverage.

12. A table-top sweetener comprising the sweetener composition according to any one of claims 1 to 8, wherein the table-top sweetener is preferably a dry table-top sweetener, and wherein the table-top sweetener is optionally provided as tablets, granules or as a powder.

13. The table-top sweetener according to claim 12, wherein the sweetener composition comprises allulose in an amount of from 98.8% to 99.2% and stevia extract in an amount of from 0.8% to 1.2% by weight relative to the total weight of allulose and stevia extract in the composition on a dry solids basis;
wherein the sweetener composition preferably comprises allulose in an amount of from 98.9% to 99.1% and stevia extract in an amount of from 0.9% to 1.1% by weight relative to the total weight of allulose and stevia extract in the composition on a dry solids basis;
wherein the sweetener composition preferably comprises allulose in an amount of about 99.03% and stevia extract in an amount of about 0.07% by weight relative to the total weight of allulose and stevia extract in the composition on a dry solids basis.

14. The table-top sweetener according to any of claims 12 or 13, wherein the table-top sweetener further comprises one or more nutritive sweetener.

15. The table-top sweetener according to any of claims 12 to 14, wherein the table-top sweetener further comprises one or more co-sweetener selected from the group consisting of high intensity sweeteners and sugar alcohols.

16. Use of the sweetener composition according to any one of claims 1 to 8 in a food product, a beverage product, a pharmaceutical product, a nutritional product, a sports product, or a cosmetic product.

17. Use of the sweetener composition according to any one of claims 1 to 8 as a bulking agent or as a coating agent.

## Patentansprüche

1. Süßstoffzusammensetzung umfassend Allulose und ein Steviaextrakt, wobei die Süßstoffzusammensetzung Allulose in einer Menge von mindestens 85 Gew.-% und Steviaextrakt in einer Menge von mindestens 0,07 Gew.-%, auf das Gesamtgewicht von Allulose und Steviaextrakt in der Zusammensetzung auf einer Trockenfeststoffbasis bezogen, umfasst, wobei der Steviaextrakt Rebaudiosid A in einer Menge von 60 Gew.-% bis 85 Gew.-%, auf das kombinierte Gesamtgewicht von Steviolglycosiden in dem Steviaextrakt auf einer Trockenfeststoffbasis bezogen, umfasst.

2. Süßstoffzusammensetzung nach Anspruch 1, wobei der Steviaextrakt Rebaudiosid A in einer Menge von 75 Gew.-% bis 80 Gew.-%, auf das kombinierte Gesamtgewicht von Steviolglycosiden in dem Steviaextrakt auf einer Trockenfeststoffbasis bezogen, umfasst.

3. Süßstoffzusammensetzung nach Anspruch 1 oder 2, wobei der Steviaextrakt mindestens ein Steviolglycosid ausgewählt aus der Gruppe bestehend aus Rebaudiosid B, Rebaudiosid C, Rebaudiosid D, Rebaudiosid E, Rebaudiosid F, Rebaudiosid M, Rebaudiosid X, Rubusosid, Steviosid und Dulcosiden und Mischungen davon umfasst und wobei der Steviaextrakt bevorzugte Rebaudiosid B umfasst.

4. Süßstoffzusammensetzung nach einem vorhergehenden Anspruch, wobei der Steviaextrakt Steviolglycoside in einer Gesamtmenge von mindestens 90 Gew.-%, bevorzugt in einer Gesamtmenge von 95 Gew.-% oder mehr, auf das Gesamtgewicht des Steviaextrakts auf einer Trockenfeststoffbasis bezogen, umfasst.

5. Süßstoffzusammensetzung nach einem vorhergehenden Anspruch, wobei der Steviaextrakt Rebaudiosid A und Steviosid in einer kombinierten Gesamtmenge von mindestens 70 Gew.-%, bevorzugt in einer kombinierten Gesamtmenge von 75 Gew.-% oder mehr, auf das Gesamtgewicht des Steviaextrakts auf einer Trockenfeststoffbasis bezogen, umfasst.

6. Süßstoffzusammensetzung nach einem vorhergehenden Anspruch, wobei der Steviaextrakt Rebaudiosid B in einer Menge von 15 Gew.-% bis 30 Gew.-%, bevorzugt 19 Gew.-% bis 23 Gew.-%, auf das kombinierte Gesamtgewicht von Steviolglycosiden in dem Steviaextrakt auf einer Trockenfeststoffbasis bezogen, umfasst.

7. Süßstoffzusammensetzung nach einem vorhergehenden Anspruch, umfassend Allulose in einer Menge von 97,5 bis 99,9 Gew.-% und Steviaextrakt in einer Menge von 0,1 bis 2,5 Gew.-%, auf das Gesamtgewicht von Allulose und Steviaextrakt in der Zusammensetzung auf einer Trockenfeststoffbasis bezogen;
bevorzugt Allulose in einer Menge von 98 bis 99,9 Gew.-% und Steviaextrakt in einer Menge von 0,1 bis 2 Gew.-%, auf das Gesamtgewicht von Allulose und Steviaextrakt in der Zusammensetzung auf einer Trockenfeststoffbasis bezogen, umfassend;
bevorzugt Allulose in einer Menge von 98,9 bis 99,4 Gew.-% und Steviaextrakt in einer Menge von 0,6 bis 1,1 Gew.-%, auf das Gesamtgewicht von Allulose und Steviaextrakt in der Zusammensetzung auf einer Trockenfeststoffbasis bezogen, umfassend;
bevorzugt Allulose in einer Menge von 99,0 bis 99,3 Gew.-% und Steviaextrakt in einer Menge von 0,7 bis 1,0 Gew.-%, auf das Gesamtgewicht von Allulose und Steviaextrakt in der Zusammensetzung auf einer Trockenfeststoffbasis bezogen, umfassend;
bevorzugt Allulose in einer Menge von etwa 99,03 Gew.-% und Steviaextrakt in einer Menge von etwa 0,97 Gew.-%, auf das Gesamtgewicht von Allulose und Steviaextrakt in der Zusammensetzung auf einer Trockenfeststoffbasis bezogen, umfassend.

8. Süßstoffzusammensetzung nach einem vorhergehenden Anspruch, ferner ein süßen Geschmack verbesserndes Zusatzmittel, einen Füllstoff, einen Aromastoff oder einen Stabilisator umfassend.

9. Nahrungsmittel- oder Getränkeprodukt umfassend die Süßstoffzusammensetzung nach einem der vorhergehenden Ansprüche.

10. Nahrungsmittel- oder Getränkeprodukt nach Anspruch 9, wobei das Produkt ein Nahrungsmittelprodukt ist und die Süßstoffzusammensetzung als Beschichtung oder Glasur auf der Oberfläche des Nahrungsmittelprodukts bereitgestellt ist.

11. Nahrungsmittel- oder Getränkeprodukt nach Anspruch 9, wobei das Produkt ein kohlensäurehaltiges oder nichtkohlensäurehaltiges Getränk ist.

12. Tafelsüßstoff umfassend die Süßstoffzusammensetzung nach einem der Ansprüche 1 bis 8, wobei der Tafelsüßstoff bevorzugt ein trockener Tafelsüßstoff ist und wobei der Tafelsüßstoff wahlweise als Tabletten, Granulate oder als Pulver bereitgestellt ist.

13. Tafelsüßstoff nach Anspruch 12, wobei die Süßstoffzusammensetzung Allulose in einer Menge von 98,8 bis 99,2 Gew.-% und Steviaextrakt in einer Menge von 0,8 bis 1,2 Gew.-%, auf das Gesamtgewicht von Allulose und Steviaextrakt in der Zusammensetzung auf einer Trockenfeststoffbasis bezogen, umfasst;
wobei die Süßstoffzusammensetzung bevorzugt Allulose in einer Menge von 98,9 bis 99,1% und Steviaextrakt in einer Menge von etwa 0,9 bis 1,1 Gew.-%, auf das Gesamtgewicht von Allulose und Steviaextrakt in der Zusammensetzung auf einer Trockenfeststoffbasis bezogen, umfasst;
wobei die Süßstoffzusammensetzung bevorzugt Allulose in einer Menge von etwa 99,03% und Steviaextrakt in einer Menge von etwa 0,07 Gew.-%, auf das Gesamtgewicht von Allulose und Steviaextrakt in der Zusammensetzung auf Trockenfeststoffbasis bezogen, umfasst.

14. Tafelsüßstoff nach einem der Ansprüche 12 oder 13, wobei der Tafelsüßstoff ferner einen oder mehrere nutritive Süßstoffe umfasst.

15. Tafelsüßstoff nach einem der Ansprüche 12 bis 14, wobei der Tafelsüßstoff ferner einen oder mehrere Co-Süßstoffe umfasst ausgewählt aus der Gruppe bestehend aus hochintensiven Süßstoffen und Zuckeralkoholen.

16. Verwendung der Süßstoffzusammensetzung nach einem der Ansprüchel bis 8 in einem Nahrungsmittelprodukt, einem Getränkeprodukt, einem pharmazeutischen Produkt, einem Ernährungsprodukt, einem Sportprodukt oder einem kosmetischen Produkt.

17. Verwendung der Süßstoffzusammensetzung nach einem der Ansprüche 1 bis 8 als Füllstoff oder als Beschichtungsmittel.

## Revendications

1. Composition édulcorante comprenant de l'allulose et un extrait de stevia, la composition édulcorante comprenant de l'allulose en une quantité d'au moins 85% en poids et de l'extrait de stevia en une quantité d'au moins 0,07% en poids par rapport au poids total de l'allulose et de l'extrait de stevia dans la composition sur une base des matières solides sèches, l'extrait de stevia comprenant du rebaudioside A en une quantité de 60% en poids à 85% en poids par rapport au poids total combiné des stéviol glycosides dans l'extrait de stevia sur une base des matières solides sèches.

2. Composition édulcorante selon la revendication 1, l'extrait de stevia comprenant du rebaudioside A en une quantité de 75% en poids à 80% en poids par rapport au poids total combiné des stéviol glycosides dans l'extrait de stevia sur une base des matières solides sèches.

3. Composition édulcorante selon la revendication 1 ou 2, dans laquelle l'extrait de stevia comprend au moins un stéviol glycoside sélectionné dans le groupe constitué du rebaudioside B, du rebaudioside C, du rebaudioside D, du rebaudioside E, du rebaudioside F, du rebaudioside M, du rebaudioside X, du rubusoside, du stévioside et des dulcosides, et de leurs mélanges et, dans laquelle l'extrait de stevia comprend préférablement du rebaudioside B.

4. Composition édulcorante selon l'une quelconque revendication précédente, l'extrait de stevia comprenant des stéviol glycosides en une quantité totale d'au moins 90% en poids, préférablement en une quantité totale de 95% en poids ou plus, par rapport au poids total de l'extrait de stevia sur une base des matières solides sèches.

5. Composition édulcorante selon l'une quelconque revendication précédente, dans laquelle l'extrait de stevia comprend du rebaudioside A et du stévioside en une quantité totale combinée d'au moins 70% en poids, préférablement en une quantité totale combinée de 75% en poids ou plus, par rapport au poids total de l'extrait de stevia sur une base des matières solides sèches.

6. Composition édulcorante selon l'une quelconque revendication précédente, dans laquelle l'extrait de stevia comprend du rebaudioside B en une quantité de 15% en poids à 30% en poids, préférablement de 19% en poids à 23% en poids, par rapport au poids total combiné des stéviol glycosides dans l'extrait de stevia sur une base des matières solides sèches.

7. Composition édulcorante selon l'une quelconque des revendications précédentes, comprenant de l'allulose en une quantité de 97,5% à 99,9% en poids et de l'extrait de stevia en une quantité de 0,1% à 2,5% en poids par rapport au poids total de l'allulose et de l'extrait de stevia dans la composition sur une base des matières solides sèches;
comprenant préférablement de l'allulose en une quantité de 98% à 99,9% en poids et de l'extrait de stevia en une quantité de 0,1% à 2% en poids par rapport au poids total de l'allulose et de l'extrait de stevia dans la composition sur une base des matières solides sèches;
comprenant préférablement de l'allulose en une quantité de 98,9% à 99,4% en poids et de l'extrait de stevia en une quantité de 0,6% à 1,1% en poids par rapport au poids total de l'allulose et de l'extrait de stevia dans la composition sur une base des matières solides sèches;
comprenant préférablement de l'allulose en une quantité de 99,0% à 99,3% en poids et de l'extrait de stevia en une quantité de 0,7% à 1,0% en poids par rapport au poids total de l'allulose et de l'extrait de stevia dans la composition sur une base des matières solides sèches;
comprenant préférablement de l'allulose en une quantité d'environ 99,03% en poids et de l'extrait de stevia en une quantité d'environ 0,97% en poids par rapport au poids total de l'allulose et de l'extrait de stevia dans la composition sur une base des matières solides sèches.

8. Composition édulcorante selon l'une quelconque des revendications précédentes, comprenant en outre un additif améliorant le goût sucré, un agent gonflant, un agent aromatisant, ou un agent stabilisant.

9. Produit alimentaire ou de boisson comprenant la composition édulcorante selon l'une quelconque des revendications précédentes.

10. Produit alimentaire ou de boisson selon la revendication 9, le produit étant un produit alimentaire et la composition édulcorante étant fournie comme enrobage ou glaçage sur la surface du produit alimentaire.

11. Produit alimentaire ou de boisson selon la revendication 9, le produit étant une boisson carbonatée ou non carbonatée.

12. Édulcorant de table comprenant la composition édulcorante selon l'une quelconque des revendications 1 à 8, l'édulcorant de table étant préférablement un édulcorant de table sec, et l'édulcorant de table étant optionnellement fourni sous la forme de comprimés, granulés ou de poudre.

13. Édulcorant de table selon la revendication 12, la composition édulcorante comprenant de l'allulose en une quantité de 98,8% à 99,2% et de l'extrait de stevia en une quantité de 0,8% à 1,2% en poids par rapport au poids total de l'allulose et de l'extrait de stevia dans la composition sur une base des matières solides sèches;
la composition édulcorante comprenant préférablement de l'allulose en une quantité de 98,9% à 99,1% et de l'extrait de stevia en une quantité de 0,9% à 1,1% en poids par rapport au poids total de l'allulose et de l'extrait de stevia dans la composition sur une base des matières solides sèches;
la composition édulcorante comprenant préférablement de l'allulose en une quantité d'environ 99,03% et de l'extrait de stevia en une quantité d'environ 0,07% en poids par rapport au poids total de l'allulose et de l'extrait de stevia dans la composition sur une base des matières solides sèches.

14. Édulcorant de table selon l'une quelconque des revendications 12 ou 13, l'édulcorant de table comprenant en outre un ou plusieurs édulcorants nutritifs.

15. Édulcorant de table selon l'une quelconque des revendications 12 à 14, l'édulcorant de table comprenant en outre un ou plusieurs co-édulcorants sélectionnés dans le groupe constitué d'édulcorants à haute intensité et d'alcools de sucre.

16. Utilisation de la composition édulcorante selon l'une quelconque des revendications 1 à 8 dans un produit alimentaire, un produit de boisson, un produit pharmaceutique, un produit nutritionnel, un produit pour le sport, ou un produit cosmétique.

17. Utilisation de la composition édulcorante selon l'une quelconque des revendications 1 à 8 comme agent gonflant ou agent d'enrobage.
